# EUROPEAN PATENT SPECIFICATION

(11) **EP 1 784 970 B1**
(45) Date of publication and mention of the grant of the patent: **01.08.2012**
(21) Application number: 05784176.9
(22) Date of filing: 24.08.2005
(51) Int. Cl.: H04M 1/57, H04M 3/493

(54) **METHOD OF OBTAINING CALLER INFORMATION IN A MOBILE TERMINAL AND MOBILE TERMINAL THEREFORE**
VERFAHREN ZUM ERHALTEN VON ANRUFERINFORMATIONEN IN EINEM MOBILEN ENDGERÄT UND MOBILES ENDGERÄT DAFÜR
PROCEDE PERMETTANT D'OBTENIR DES INFORMATIONS D'APPELANT DANS UN TERMINAL MOBILE ET TERMINAL MOBILE ASSOCIE

(30) Priority: 02.09.2004 US 932404
(43) Date of publication of application: 16.05.2007
(73) Proprietor: Nokia Corporation, 02150 Espoo (FI)
(72) Inventor: TOROPAINEN, Teemu, FIN-90540 Oulu (FI); LAANINEN, Ilpo, FIN-90230 Oulu (FI)
(74) Representative: Brax, Matti Juhani
(86) International application number: PCT/IB2005/002938
(87) International publication number: WO 2006/024952

(56) References cited:
- EP-A- 1 396 989
- WO-A-03/073732
- US-A1- 2003 026 402
- US-A1- 2004 067 751

## Description

### Technical Field

The present invention generally relates to a method and a mobile terminal for obtaining identity information about a remote communication party who attempts to establish communication with a user of a mobile terminal over a mobile telecommunications network.

### Background

A mobile (cellular) telephone for a telecommunications system like GSM, UMTS, D-AMPS or CDMA2000 will be used as an example of a mobile terminal according to the above. A remote communication party may attempt to establish communication with the user of such a mobile terminal in different ways. The most well-known way is, of course, by placing a telephone call to the mobile terminal from any suitable remote telephonic apparatus, e.g. a stationary, mobile or satellite telephone, or a computer with IP telephony capabilities. Another common way is to send an electronic message such as SMS ("Short Messages Services"), MMS ("Multimedia Messages Services") or email to the mobile terminal.

When the mobile terminal receives an incoming call or electronic message, it provides an alert to its user acoustically, visually or tactically, or in a combination thereof. For the convenience of the user, the mobile terminal normally presents information about the identity of the remote party by displaying such information on the terminal's display. For instance, for an incoming telephone call, the mobile terminal first detects the telephone number of the caller (also known as A number or CLI(D) - Caller Line Identity). The mobile terminal checks the detected telephone number against a locally stored set of Contacts or Phonebook records, and in case of a successful match, a name entry from the matching record is read and presented on the display. To most users, a name is much easier to remember and associate with another person than a telephone number, and consequently the described manner of presenting the identity of the caller is clearly beneficial for the mobile terminal user. By knowing who the caller is already when the call arrives, the user may prepare himself at least for a split second before he answers the call. The user will also have an opportunity to prioritize depending on the given situation and decide to answer a call from one person but not from another, for instance if an important call is expected to come and must be answered to immediately, even if the user is in a meeting.

However, if the detected incoming telephone number cannot be successfully matched to the terminal's Contacts or Phonebook, the user cannot avail himself of the advantages above for the given incoming call. Hence, for calls from unknown remote parties for whom there are no records stored in Contacts or Phonebook, the identity of the caller will be anonymous to the user when he has to decide whether or not to answer the call. If the user chooses not to answer the call, or if the call is missed because he was not near his mobile terminal when it rang, and he wants to learn about the identity of the caller, the user is left with the following alternatives. He may either recall the detected number and vocally find out who the caller is, or consult a lookup service to perform an identity lookup on the detected number which will provide additional identity information such as name and address associated with the detected number. Such lookup service can either be reached vocally by dialling a certain service number or by way of a computerized lookup service by e.g. filling in a search form on a WAP or WWW page or sending an SMS inquiry for the detected number. Avoiding these manual steps would be desirable, since it would save time and effort that could be better spent on something more useful.

Document US 6,311,057 presents a method of providing improved service to telephone users. More particularly, US 6,311,057 concentrates on a certain situation, namely when someone (A subscriber) tries to make a call to the mobile terminal of another one (B subscriber) but the mobile terminal is currently unavailable for answering the call. The mobile terminal may be currently unavailable because it is switched off or out of reach for the mobile telecommunications network. In this, and only this, situation a mobile switching center (MSC) in the network automatically registers the telephone number (A number) of the caller and analyzes the registered telephone number to determine a particular operator to which the caller is related. Then, the mobile switching center requests additional identity information from a subscriber database held by the operator, using the registered telephone number as a search key. If the database search is successful, it results in name information for the registered telephone number being returned to the mobile switching center. The name information may include first name and surname for individuals, and organization name for companies.

The mobile switching center then commands an SMS central to generate an SMS message addressed to the B subscriber, the SMS message including the registered A number together with the associated name information retrieved from the operator's subscriber database, and preferably the date and time of the unsuccessful call attempt. The SMS message is sent to the mobile terminal once it becomes operatively available to the network. By reading the SMS message, the user of the mobile terminal will be informed about the unsuccessful call attempt, both as regards the telephone number of the attempting caller and the name of the caller and the user may decide whether or not to make a return call.

While the approach according to US 6,311,057 provides some degree of service to users of mobile terminals, it nevertheless has a couple of drawbacks.

Firstly, the service in accordance with US 6,311,057 is performed only when the mobile terminal is currently unavailable for the mobile telecommunications network. If, on the other hand, the mobile terminal can be reached by the network, the incoming call will be forwarded to the mobile terminal in the normal manner. Thus, if the call is successfully forwarded to the mobile terminal but the caller is unknown, no additional identity information (name information) will be supplied to the mobile terminal.

Secondly, the intelligence of the service is provided by the mobile telecommunications network, thereby requiring this to have a certain architecture. The network will have to be modified, in hardware and/or in software, before starting to provide the service. Moreover, the service requires connection to or cooperation with a number of different operators, each possibly having its own interface for accessing the subscriber database. Thus, requiring the mobile telecommunications network itself to provide the intelligence of the service is disadvantageous.

Other approaches are disclosed in documents EP 1396989 A2 presenting a telephone unit capable of checking a caller information even upon incoming call from a caller not registered on a telephone directory of the telephone unit and US 2004/0067751 A1 presenting a method for using called ID information in a browser of a mobile communication device.

### Summary

In view of the above, an objective of the invention is to solve or at least reduce the problems discussed above. In more particular, a purpose of the invention is to provide an improved and flexible manner of giving a user of mobile terminal additional identity information about a remote communication party that tries to establish communication with the mobile terminal by telephone call or electronic message.

Generally, the above objectives are achieved by a method and a mobile terminal according to the attached independent patent claims.

A first aspect of the invention is a method of obtaining communication party identity information, the method, in a mobile terminal, comprises
detecting an attempt from a remote communication party to establish communication over a mobile telecommunications network;
determining, from the detected attempt, first identity information about the remote communication party;
searching a memory in the mobile terminal for certain additional identity information associated with said first identity information;
in the absence of such additional identity information, transmitting from said mobile terminal an additional identity information request to a remote server using the mobile telecommunications network, said request including said first identity information as a search key;
receiving an additional identity information reply over the mobile telecommunications network; and
processing additional identity information contained in said additional identity information reply to render it available to a user of the mobile terminal,
wherein the method comprises providing a user-configurable setting that specifies what type of additional identity information that is to be requested from said remote server.

One advantage with the first aspect of the invention is that it allows fully automatic remote identity lookup on an unknown remote communication party without requiring any actions from the user of the mobile terminal. Hence, by the automatic identity lookup, the mobile terminal will automatically detect first identity information about the remote communication party, determine whether the remote communication party is unknown by checking for additional identity information stored locally in the mobile terminal, based upon the outcome of the check automatically request the lacking additional identity information from a remote server, and process and make such returned additional identity information available to the user, so that he will learn about who the remote communication party is and be able to take appropriate action based thereon.

Another advantage with the first aspect of the invention is that the automatic approach will save time and effort for the user.

In one embodiment, the step of detecting an attempt to establish communication involves receiving an incoming telephone call from the remote communication party. Hence, the first identity information for the caller maybe detected by the callee's mobile terminal as a subscriber telephone number (A number, CLI(D), etc.) for a mobile telecommunications network, public switched telephone network, IP telephony network or satellite telecommunications network.

In another embodiment, the step of detecting an attempt to establish communication involves receiving an incoming electronic message from the remote communication party. The electronic message may be an SMS or MMS message, and the message sender identity may be a telephone number for a mobile telecommunications system such as GSM, UMTS, D-AMPS or CDMA2000. Alternatively, the electronic message may be an email message.

In one embodiment, the additional identity information contained in the additional identity information reply includes name information about the remote communication party. In an alternative embodiment, it includes name information as well as other identity information, such as address information, about the remote communication party. A user-configurable setting may specify what type of additional identity information that is to be requested from the remote server.

Processing additional identity information contained in said additional identity information reply may for instance involve presentation on a display of the mobile terminal, advantageously in real time while an incoming telephone call is still not terminated. The processing may also or alternatively involve updating a record in a telephone call list or message inbox stored in the memory, or updating or creating a contact record stored in the memory and associated with the remote communication party.

The additional identity information request and/or reply may be communicated in the form of an electronic message, packet-switched data communication or circuit-switched data communication, or in the form of any combination thereof.

In an alternative embodiment, rather than performing the remote identity lookup automatically without interaction with the user of the mobile terminal, it may be performed only upon command or confirmation from the user. Whether or not the remote identity lookup is to be performed automatically may be specified in a user-configurable setting.

A second aspect of the invention is a mobile terminal having a processing device, a memory and a wireless interface adapted for communication with a mobile telecommunications network, the processing device being adapted to
detect an attempt from a remote communication party to establish communication through the wireless interface;
determine, from the detected attempt, first identity information about the remote communication party;
search the memory for certain additional identity information associated with said first identity information;

in the absence of such additional identity information, transmit through said wireless interface an additional identity information request to a remote server, said request including said first identity information as a search key;
receive, through said wireless interface, an additional identity information reply; and
process additional identity information contained in said additional identity information reply to render it available to a user of the mobile terminal,
wherein the processing device is further adapted to provide a user-configurable setting that specifies what type of additional identity information that is to be requested from said remote server.

The mobile terminal may be a portable telecommunication apparatus such as a mobile telephone, personal digital assistant (PDA), etc, for a mobile telecommunication system like GSM, UMTS, D-AMPS or CDMA2000. The processing device may be a CPU ("Central Processing Unit"), DSP ("Digital Signal Processor") or any other electronic programmable logic device or combination of devices. The memory may be an electronic memory such as RAM memory, ROM memory, EEPROM memory, flash memory, or any combination thereof.

The second aspect has generally the same features and advantages as the first aspect.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Embodiments of the present invention will now be described in more detail, reference being made to the enclosed drawings, in which:
FIG 1 is a schematic illustration of a telecommunication system, including a mobile terminal, a remote communication party, a remote server and a mobile telecommunications network, as an example of an environment in which the present invention may be applied.
FIG 2 is a schematic block diagram illustrating a mobile terminal according to one embodiment.
FIG 3 is a flow chart which illustrates a method, in a mobile terminal, of obtaining communication party identity information according to one embodiment.
FIGs 4a-4d are schematic display screen snapshots which are shown in sequence to a user of a mobile terminal to announce an incoming telephone call, identity information about the caller being dynamically updated.
FIGs 4e and 4f are schematic display screen snapshots which show a list of recent calls and how identity information about a missed call is dynamically updated.
FIGs 5a-5c are schematic display screen snapshots which are shown in sequence to a user of a mobile terminal to announce an arriving electronic message, identity information about the sender being dynamically updated.
FIG 5d is a schematic display screen snapshot which shows a messaging inbox and how identity information about a message from an unknown sender is dynamically updated.
FIG 6 is a schematic display screen snapshot which shows an identity lookup service settings dialog.

### Detailed Description of the Drawings

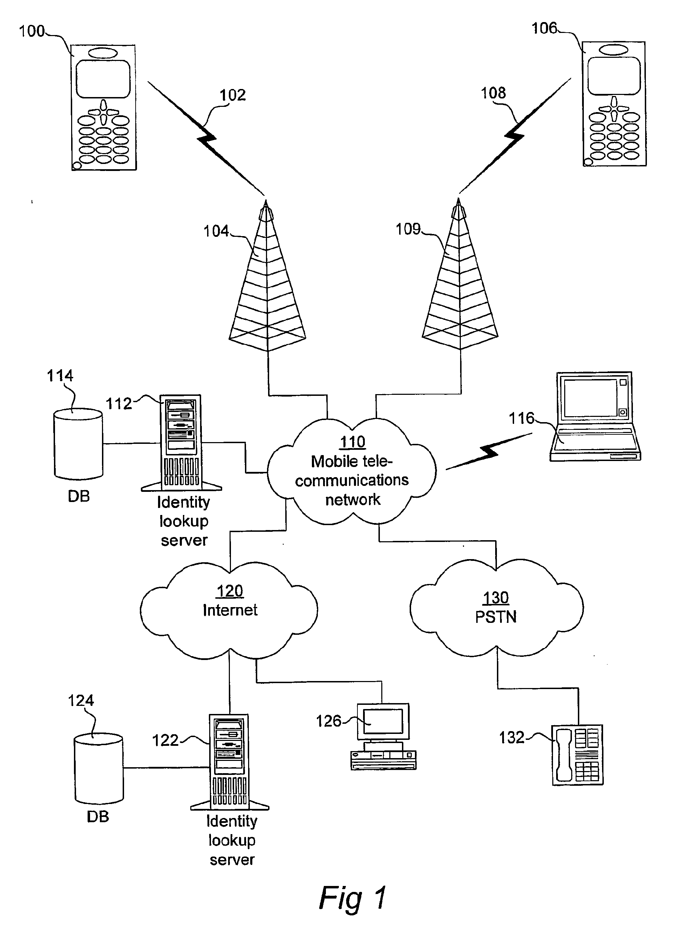

FIG 1 illustrates one example of a telecommunications system in which the invention may be applied. In the telecommunication system of FIG 1, various telecommunications services such as voice calls, data calls, facsimile transmissions, music transmissions, still image transmissions, video transmissions, electronic message transmissions and electronic commerce may be performed to and from different mobile terminals 100, 106. Among these services, telephone calls and electronic message transmissions are of particular importance for the present invention.

In the following, a voice call will be used as one example of an attempt to establish communication, but other types of telephone calls such as data or facsimile calls are also possible. Furthermore, an SMS message will be used as another example of an attempt to establish communication, but other types of electronic messages, including but not limited to MMS and email messages, are also possible.

The mobile terminals 100, 106 are connected to a mobile telecommunications network 110 through RF links 102 and 108 via respective base stations 104, 109. The mobile telecommunications network 110 may be any commercially available mobile telecommunications system, such as GSM, UMTS, D-AMPS or CDMA2000. The mobile terminals 100, 106 are illustrated as mobile (cellular) telephones but may alternatively be other kinds of portable devices, such as personal digital assistants or communicators.

A public switched telephone network (PSTN) 130 is connected to the mobile telecommunications network 110 in a familiar manner. Various telephone terminals 132 are connected to the PSTN 130.

The mobile telecommunications network 110 is operatively connected to a wide area network 120, which may be Internet or a part thereof. Various client computers 126 may be connected to the wide area network 120.

A remote server computer for providing identity lookup services in accordance with the invention may be connected to the mobile telecommunications network 110, as indicated at 112, or to the wide area network 120, as indicated at 122. Some embodiments may employ two remote servers 112, 122, as shown in FIG 1. A database 114, 124 contains identity lookup information and is connected to the or each remote server 112, 122.

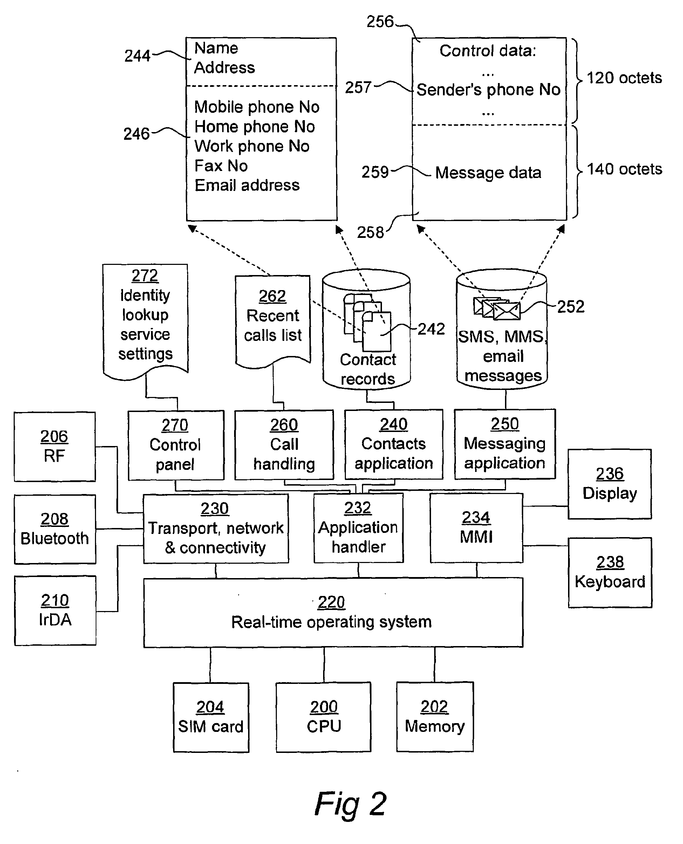

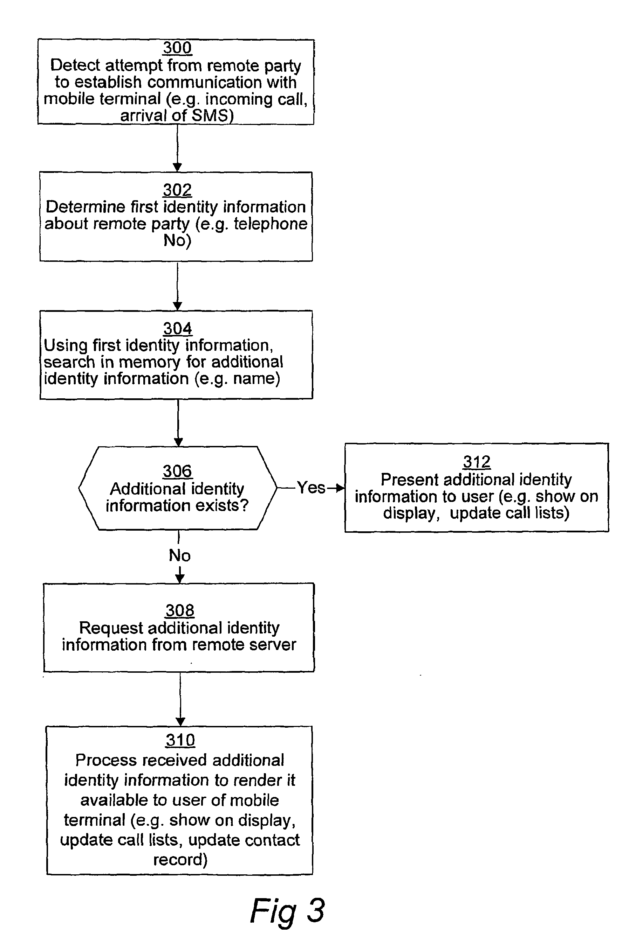

In the exemplifying situation of FIG 1, an attempt to establish communication with a user of the mobile terminal 100 may be made in the form of a telephone call or an SMS message from another user of the mobile terminal 106, or, if properly equipped with software and/or hardware for voice calls or SMS messaging, from any laptop computer 116, stationary telephone 132 or client computer 126. A method for handling such a communication attempt in the mobile terminal 100 will be described later with reference to FIG 3, but first some details about the constitution of the mobile terminal 100 will be given with reference to FIG 2.

As seen in FIG 2, the mobile terminal 100 has a controller 200 which is responsible for the overall operation of the mobile terminal and is preferably implemented by any commercially available CPU ("Central Processing Unit"), DSP ("Digital Signal Processor") or any other electronic programmable logic device. The controller 200 has associated electronic memory 202 such as RAM memory, ROM memory, EEPROM memory, flash memory, or any combination thereof. The memory 202 is used for various purposes by the controller 200, one of them being for storing data and program instructions for various software in the mobile terminal. The software includes a real-time operating system 220, man-machine interface (MMI) drivers 234, an application handler 232 as well as various applications. The applications include a contacts (phonebook) application 240, a messaging application 250, a call handling application 260 and a control panel application 270, as well as various other applications which are not central to the invention. The MMI drivers 234 cooperate with conventional MMI or input/output (I/O) devices, including a display 236 and a keyboard 238 as well as various other I/O devices such as a microphone, a speaker, a vibrator, a joystick, a ringtone generator, an LED indicator, etc. As is commonly known, a user may operate the mobile terminal through the man-machine interface thus formed.

The software also includes various modules, protocol stacks, drivers, etc., which are commonly designated as 230 and which provide communication services (such as transport, network and connectivity) for an RF interface 206, and optionally a Bluetooth interface 208 and an IrDA interface 210. The RF interface 206 comprises an internal or external antenna as well as appropriate radio circuitry for establishing and maintaining a wireless link to a base station (e.g. the link 102 and base station 104 in FIG 1). As is well known to a man skilled in the art, the radio circuitry comprises a series of analogue and digital electronic components, together forming a radio receiver and transmitter. These components include, i.a., band pass filters, amplifiers, mixers, local oscillators, low pass filters, AD/DA converters, etc.

The mobile terminal also has a SIM card 204 and an associated reader. As is commonly known, the SIM card 204 comprises a processor as well as local work and data memory.

The contacts application 240 handles a plurality of contact entries or records 242, which are stored in the memory 202. In the embodiment of FIG 2, each contact record 242 has a plurality of data fields 244, 246; a Name field and an Address field 244, and a Mobile phone No field, a Home phone No field, a Work phone No field, a Fax No field and an Email address field 246.

The messaging application 250 handles a plurality of SMS messages 252, both unread messages and the ones that have already been read/opened. The messages 252 may be stored in memory 202 of the mobile terminal, in the internal memory of the SIM card 204, or in both. Stored SMS messages may also be transferred between one of these memories and the other. FIG 2 illustrates the composition of a typical SMS message 252 upon receipt in the mobile terminal. The SMS message 252 has a control data portion 256 and a message data portion 258. The control data portion 256 occupies 120 octets. The message data portion 258 occupies 140 octets and contains the payload of the SMS message, i.e. the actual message data 259. Of course, the entire message data portion 258 need not always be filled with valid data; in case the sender of the message has written only a short message, some part of the message data portion 258 may contain garbage data. Alternatively, the message data portion 258 may be terminated after the last valid octet by a predetermined control character, or the length of the message data portion 258 may be indicated as a header parameter in the control data portion 256.

The control data portion 256 contains various protocol layer-specific and message type-specific control data, including a specification of the telephone number 257 of the sender. For details about the format of SMS messages, reference is made to available standards for 2G, 2.5G and 3G mobile telecommunications systems. For instance, the SMS service for 3G systems is decribed in detail in "3GPP TS 24.011", which is available at http://www.3gpp-org/.

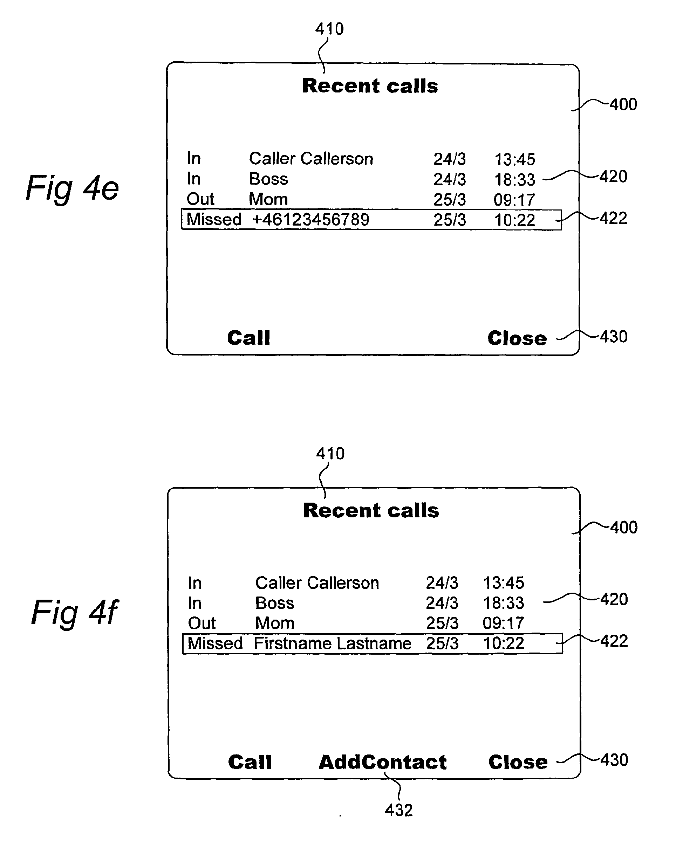

The call handling application 260 handles all aspects of conventional voice calls, e.g. receiving and announcing incoming calls, and generating outgoing calls. The call handling application 260 also keeps record of various call statistics, including a Recent calls list 262, which is exemplified in FIGs 4e-4f and which will be described in more detail later.

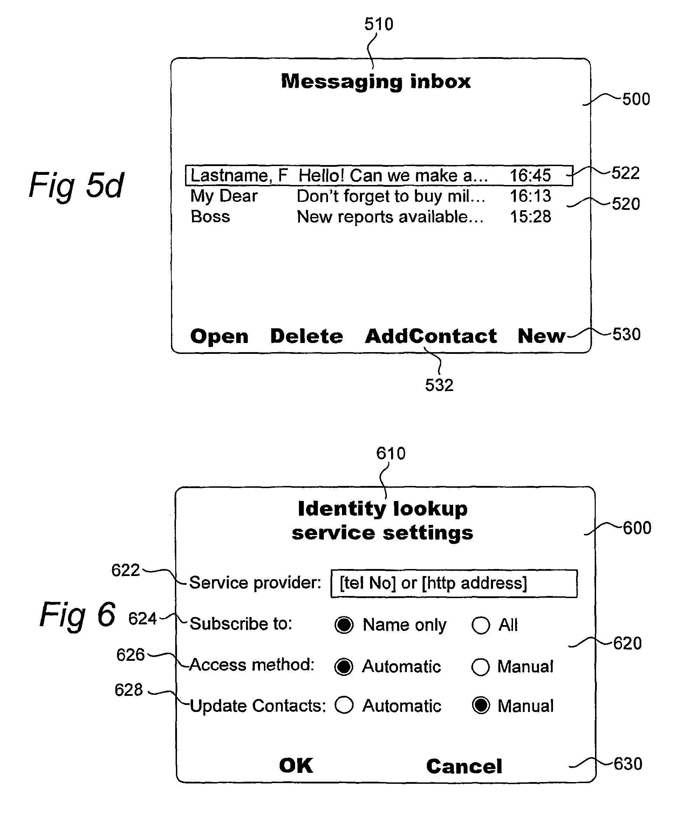

The control panel application 270 allows for the user to adjust various settings in the mobile terminal, including settings that relate to the identity lookup service according to the invention. As seen in FIG 6, in one embodiment the identity lookup service settings 610 are presented on a display screen 600. Here, the user may specify a telephone number or http address 622 to the remote identity lookup server 112 or 122. The user may also select, at 624, the scope of the additional identity information to be returned as a result of each identity lookup; in the disclosed embodiment he may either choose to subscribe only to name information (e.g. in the form of first name and last name (surname) for individuals and organization names for companies), or to more complete information that includes not only name information but also e.g. postal/visit/email address information. Moreover, the user may select, at 626, whether the identity lookup service is to be invoked and performed automatically by the mobile terminal without command or confirmation from the user, or whether identity lookup is to be performed manually upon command or confirmation from the user. Finally, at 628, he may select whether or not a contact record 242 of the contacts application 240 is to be updated automatically with additional identity information received in response to a remote identity lookup.

Referring now to FIG 3, a method of obtaining communication party identity information in response to an attempt from a remote communication party to establish communication with a mobile terminal will now be described.

In a first exemplifying situation, the attempt to establish communication is an incoming telephone call to the mobile terminal. In step 300, the incoming call is detected through RF interface 206, modules 230, real-time operating system 220, application handler 232 and call handling application 260 of the mobile terminal. In step 302, first identity information about the caller (A subscriber) is detected in the form of the caller's telephone number (A number) and in accordance with the signaling protocol used by the particular mobile telecommunications network 110 and its network operator. Then, in step 304, the call handling application 260 asks the contacts application 240, through the application handler 232, to search for the detected first identity information among the stored contact records 242. As seen in FIG 2, each contact record may contain both first identity information data 246 such as different telephone numbers, and additional identity information data 244 such as name and address information for the person that is represented by the first identity information. In case of a match, the contacts application 240 responds to the call handling application 260 with the additional identity information 244 from the matching contact record 242. Thus, in step 306, the call handling application 260 determines whether or not the identity of the caller, as represented by the detected first identity information 246 (telephone number), is known to the mobile terminal and locally available as additional identity information 244 in a contact record 242.

If the results of the check in step 306 is negative, the call handling application makes a request for additional identity information, the request including the detected first identity information as search key. The request is sent to the remote server 112 over the mobile telecommunications network 110 through application handler 232, real-time operating system 220, modules 230 and RF interface 206. The exact form in which the request is made depends on implementation; it can for instance be performed as a data call to a predefined lookup service telephone number (setting 622 in FIG 6), wherein the call is handled by the network operator which preferably also administers the remote identity lookup server 112. Of course, such predefined telephone number may be directed to another operator than the operator of network 110; in such case the latter will forward the data call to such another operator. The predefined lookup service telephone number may also be destined to a phone directory server which is proprietary of a company rather than a network operator.

Alternatively, the mobile telecommunications network 110 may be configured to map and transform a data call to the lookup service telephone number to an address in the wide area network 120, such as an http address to the remote server 122 in FIG 2. In such a case, the remote server 122 may either respond directly to the mobile terminal with a http reply, or may such reply be remapped and retransformed into response data in the ongoing data call.

As another alternative, the identity lookup service provider may be directly defined, at 622 in FIG 6, as a predefined address in the wide area network 120, such as an http address to the remote server 122, wherein the request for additional identity information may be sent directly as e.g. a http request to server 122, using any available mobile data communication service in the network 110, such as GPRS (General Packet Radio Service). Security features such as SSL/TSL (Secure Sockets Layer/- Transport Layer Security) or digital certificates may be used.

Still an alternative is to send the request for additional identity information in the form of an SMS message to the identity lookup service provider.

In either case, the remote identity lookup server 112 (and/or 122) has a database 114 (and/or 124) that contains a large number of identity records that contain not only data of the first identity information type (e.g. telephone number) but also additional identity information such as name and/or address. Database 114 (124) may for instance contain subscriber records or information exported from such records. The subscriber records may have been collected from several network operators, both domestic and foreign. Moreover, in case no match is found in the database 114 of the remote server 112, a further request may be made from server 112 to the server 122, which may either report back to the server 112 or directly to the mobile terminal.

The reply from the remote server 112 (122) to the request may be sent in different ways. In the case of a data call, the reply is conveniently communicated during the same call session, i.e. a circuit-switched link between mobile terminal and remote server is established and maintained during the transmittal of the request, processing of the request and transmittal of the reply. If the request was made in the form of a http request, the reply is conveniently given as a http reply, i.e. in a packet-switched manner. If the request was made in an SMS, the reply may also be given in an SMS. However, the reply need not be given on the same type of communication channel as the request was made; on the contrary, essentially all combinations of request and reply channels are conceivable, including but not limited to the ones given above. In one embodiment, the reply is provided as an electronic business card, such as vCard, which is compatible with the contacts application 240 and its contact records 242.

Basically, the reply may either contain the additional identity information found for the requested first identity information, or, in case the remote server found no successful match, a message or error code to alert this. Furthermore, in case of a successful match, the reply may either contain all additional data found, or only such data fields that have been specified in the request - e.g. "name only" if the setting 624 has this value.

Once the reply has been received at the mobile terminal in step 310, the received additional identity information is processed by the call handling application to make the user aware of it. This processing may include extracting the desired data field(s) from the received additional identity information, converting it to a format suitable for presentation, followed by visual or acoustical presentation to the user through the man-machine interface 234, 236.

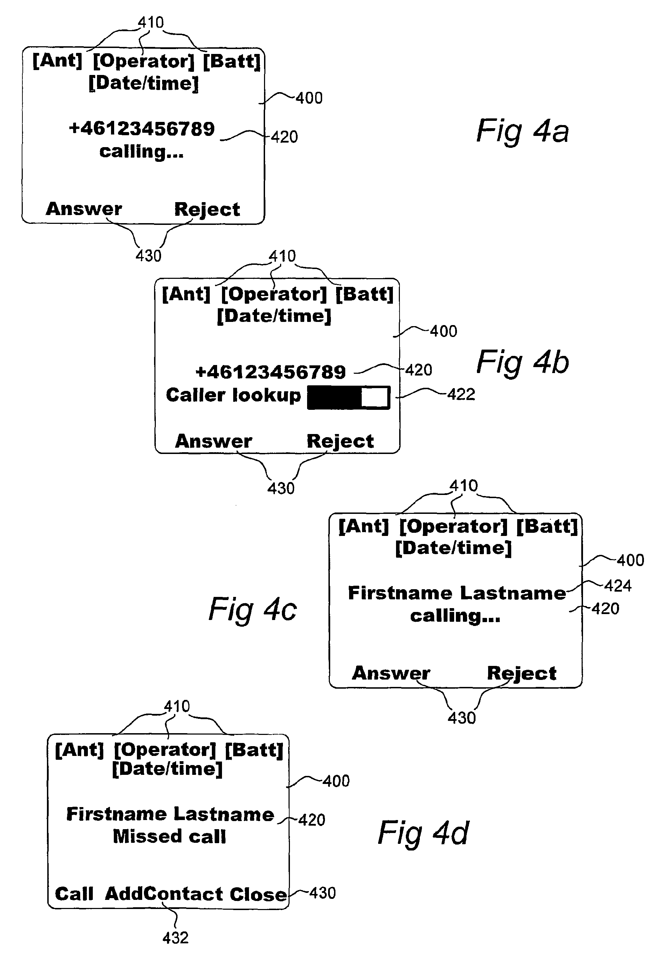

As illustrated by FIGs 4a-4d, in one embodiment, an incoming call from a remote communication party (caller, having telephone number +46123456789) is presented to the user (callee) as a dynamic display screen or window 400 on the display 236 of the mobile terminal in the following way.

Starting with FIG 4a, the display screen 400 contains at its upper part various visual indications (text characters and/or graphical symbols) 410, including an antenna/received signal strength indicator, the current network operator, a battery level indicator and the current date/time. In the center of the display screen 400 an alert 420 of the incoming call is given once it has been detected in steps 300-302 by the call handling application 260. More specifically, the call handling application 260 shows, at 420, the determined first identity information (caller's telephone number) together with an informative text: "+46123456789 calling...". Soft keys/menu options 430 are displayed at the bottom part of the display screen 400 to allow the user to answer or reject the call.

Simultaneously, steps 304-306 are performed to look for a local match for +46123456789 among the contact records 242. Assuming that no local match is found, the call handling application 260 proceeds to generate the remote identity lookup request in step 308. Pending the outcome of this request, the alert 420 is updated (FIG 4b) to indicate to the user that the lookup service is in progress, in the form of a message and a progress bar 422. Once the reply to the identity lookup request has been received and processed in steps 308 and 310, if the call is still pending (still ringing or answered but still ongoing, the alert 420 is again updated (FIG 4c) to present the name information 424 contained in the received additional identity information.

If the call is missed, the alert 420 may be updated once more (see FIG 4d). The soft keys/menu options 430 are changed to facilitate recall. Moreover, in case the Update Contacts setting 628 in FIG 6 is not set to Automatic, a soft key/menu option 432 is displayed to give the user an opportunity to command update or creation of a contact record 242 for the caller. The updated or created contact record 242 will contain the telephone number of the caller, together with appropriate data fields from the additional identity information received.

As seen in FIGs 4e-4f, the recent calls list 262 held by the call handling application 260 is updated, at 422, to include the name behind number +46123456789, rather than the number itself. If this particular call is selected in the recent calls list 262, and if Update Contacts setting 628 in FIG 6 is not set to Automatic, an additional soft key/menu option 432 will be available here, too.

If, in step 310, it is found that the reply to the remote identity lookup request contains no additional identity information from the remote server, meaning that no successful match was found there, the call handling application 260 may be adapted to present an error message on the display 236, generate an acoustic error signal, or simply refrain from doing anything but removing the message text and status bar 422 from the display screen 400 of FIG 4b.

Referring back to step 306 of FIG 3, if the check therein is positive, meaning that there already exists a contact record 242 with appropriate additional identity information, such as name, for number +46123456789 - i.e., the caller is known to the user of the mobile terminal - the execution proceeds to step 312. Here, the incoming call is alerted by directly showing the name from the contact record, essentially as indicated at 420 in FIG 4c.

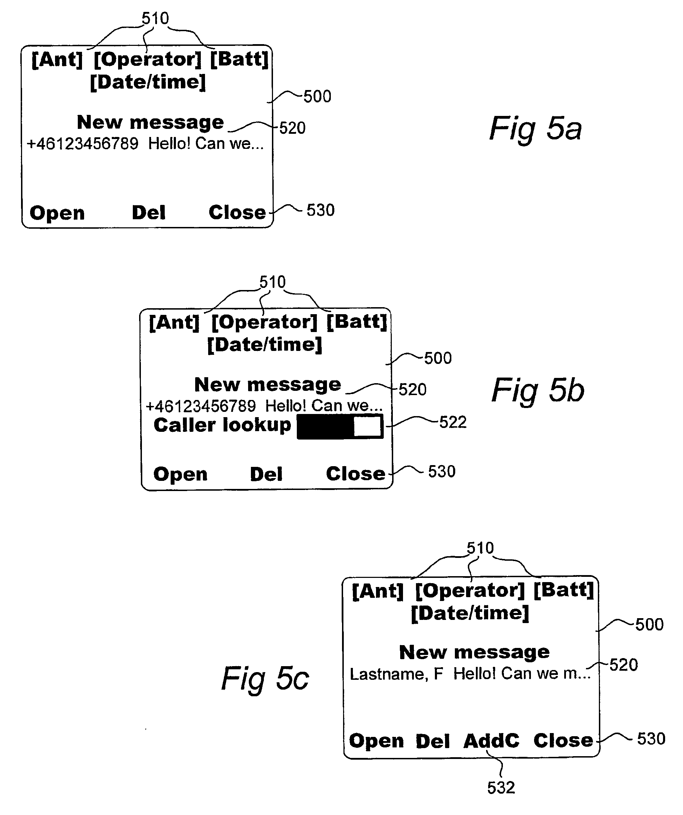

A second exemplifying situation will now be described with reference to FIG 3 and FIGs 5a-5d. Here, the attempt to establish communication is in the form of an arriving SMS message to the mobile terminal. Again, the remote communication party (sender) has first identity information in the form of telephone number +46123456789.

In step 300 the new SMS message is received by the RF interface 206 and is forwarded by the real-time operating system 220 and application handler 232 to the messaging application 250. The messaging application 250 stores the new message 252 in either the memory 202 or the SIM card 204. Then, in step 302 the messaging application 250 processes the control data portion 258 of the new message 252. In more particular, it extracts the sender's telephone number 257 and then, in step 304, inquires the contacts application 240 whether the extracted telephone number is known to the mobile terminal. The contacts application 240 searches all of the contact records 242 and responds, in case of a match, to the messaging application 250 with the additional identity information found.

If it is decided in step 306 that no local match was found, a remote identity lookup request is generated and sent in step 308 to the remote server, as has been described above. The reply is received and processed in step 310.

FIGs 5a-5c illustrates a sequence of display screens 500 which is shown by the messaging application 250 during the arrival of the SMS message. The contents and purpose of these display screens correspond essentially to those shown in FIGs 4a-4c. In FIG 5a the new message is announced at the center part 520 of the display screen. Soft keys/menu options 530 provide opportunities for the user to open, close or delete the message. In FIG 5a, the reply from the remote identity lookup request has not yet been sent (i.e., prior to step 308); therefore the sender's telephone number is shown. In FIG 5b, the mobile terminal is waiting for the reply to the request (between steps 308 and 310); therefore the informative message and progress bar 522 are shown. In FIG 5c, the additional identity information has been received and processed (step 310), the additional identity information being shown at 520 instead of the telephone number and the new soft key/menu option 532 for requesting update of the contact record being available at 532.

FIG 5d illustrates an message inbox 510 shown as a display screen 500 by the messaging application 250. At the center part 520 a list of recently received messages is shown, including the latest received message 522 which was shown also in FIGs 5a-5c. As is seen in the drawing, the messaging application 250 has substituted the sender's telephone number with the name information received from the remote server. There is also provided a number of soft keys/menu options 530, including one, 532, for requesting update of the contact record in the manner described above.

In an alternative embodiment, a manual step of command or confirmation is required in order to issue a request for additional identity information from the remote identity lookup server 112 (122). This corresponds to setting 626 in FIG 6 being set to Access method = Manual. In this embodiment, menu options or soft keys, etc., for invoking the identity lookup function are available on various appropriate display screens. For instance, on the display screen in FIG 4a, there is provided an additional soft key/menu option 430 that upon selection by the user causes a request for additional identity information about the detected incoming number +46123456789 to be sent to the remote server. Once the selection has been made, the display screen 400 changes to the one shown in FIG 4b, and the rest of the identity lookup procedure commences in the way described above.

Further, a similar menu option or soft key for invoking remote identity lookup may be available on a Missed call display screen (if the telephone number concerned is unknown and an identity lookup has not already been performed), on a Recent calls display screen if an unknown number is selected/highlighted, on a display screen for announcing the arrival of an electronic message from an unknown sender, or on a display screen for displaying a message inbox, etc.

The embodiments above have referred to incoming telephone calls and SMS messages. However, the remote identity lookup functionality of the present invention may also be applied for other types of calls or messages from unknown sources, facsimile receptions, MMS messages and email messages being some feasible examples.

The invention has mainly been described above with reference to a few embodiments. However, as is readily appreciated by a person skilled in the art, other embodiments than the ones disclosed above are equally possible within the scope of the invention, as defined by the appended patent claims.

### Additional clauses

A method of obtaining communication party identity information, the method comprising the steps, in a mobile terminal, of:
detecting an attempt from a remote communication party to establish communication over a mobile telecommunications network as either an incoming telephone call or an incoming electronic message;
determining, from the detected attempt, first identity information about the remote communication party;
searching a memory in the mobile terminal for certain additional identity information associated with said first identity information;
in the absence of such additional identity information, transmitting from said mobile terminal an additional identity information request to a remote server using the mobile telecommunications network, said request including said first identity information as a search key;
receiving an additional identity information reply over the mobile telecommunications network; and
processing additional identity information contained in said additional identity information reply to render it available to a user of the mobile terminal by:
   presentation on a display of said mobile terminal, and,
   in case said attempt is an incoming telephone call, updating a record in a telephone call list stored in said memory, and
   in case said attempt is an incoming electronic message, updating a record in a message inbox stored in said memory.

A mobile terminal having a processing device, a memory and a wireless interface adapted for communication with a mobile telecommunications network, the processing device being adapted to
detect an attempt from a remote communication party to establish communication through the wireless interface as either an incoming telephone call or an incoming electronic message;
determine, from the detected attempt, first identity information about the remote communication party;
search the memory for certain additional identity information associated with said first identity information;
in the absence of such additional identity information, transmit through said wireless interface an additional identity information request to a remote server, said request including said first identity information as a search key;
receive, through said wireless interface, an additional identity information reply; and
process additional identity information contained in said additional identity information reply to render it available to a user of the mobile terminal by:
   presentation on a display of said mobile terminal, and,
   in case said attempt is an incoming telephone call, updating a record in a telephone call list stored in said memory, and
   in case said attempt is an incoming electronic message, updating a record in a message inbox stored in said memory.

## Claims

1. A method of obtaining communication party identity information, the method, in a mobile terminal, comprises
detecting (300) an attempt from a remote communication party to establish communication over a mobile telecommunications network;
determining (302), from the detected attempt, first identity information about the remote communication party;
searching (304) a memory in the mobile terminal for certain additional identity information associated with said first identity information;
in the absence of such additional identity information, transmitting (308) from said mobile terminal an additional identity information request to a remote server using the mobile telecommunications network, said request including said first identity information as a search key;
receiving an additional identity information reply over the mobile telecommunications network; and
processing (310) additional identity information contained in said additional identity information reply to render it available to a user of the mobile terminal,
**characterized in that** the method further comprises providing a user-configurable setting that specifies what type of additional identity information that is to be requested from said remote server.

2. The method of claim 1, wherein the method being performed automatically without interaction with said user of the mobile terminal.

3. The method of claim 1, wherein said transmitting an additional identity information request is performed only upon command or confirmation from the user.

4. The method of claim 1, wherein said detecting an attempt to establish communication involves receiving an incoming telephone call.

5. The method of claim 1, wherein said detecting an attempt to establish communication involves receiving an incoming electronic message.

6. The method of claim 1, wherein said first identity information is a subscriber telephone number associated with said remote communication party.

7. The method of claim 1, wherein said additional identity information request or reply is communicated in the form of an electronic message.

8. The method of claim 1, wherein said additional identity information request or reply is communicated in the form of packet-switched data communication.

9. The method of claim 1, wherein said additional identity information request or reply is communicated in the form of circuit-switched data communication.

10. The method of claim 1, wherein said additional identity information contained in said additional identity information reply comprises name information about the remote communication party.

11. The method of claim 1, wherein said additional identity information contained in said additional identity information reply comprises name information and address information about the remote communication party.

12. The method of claim 1, wherein said providing a user-configurable setting specifies whether or not steps the method are to be performed automatically without interaction with said user.

13. The method of claim 1, wherein said processing additional identity information contained in said additional identity information reply involves presentation on a display of said mobile terminal.

14. The method of claim 4 and 13, wherein the presentation is made in real time while said incoming telephone call is still not terminated.

15. The method of claim 4, wherein said processing additional identity information contained in said additional identity information reply involves updating a record in a telephone call list stored in said memory.

16. The method of claim 5, wherein said processing additional identity information contained in said additional identity information reply involves updating a record in a message inbox stored in said memory.

17. The method of claim 1, wherein said processing additional identity information contained in said additional identity information reply involves updating or creating a contact record stored in said memory and associated with said remote communication party.

18. The method of claim 1, which further comprises, between said transmitting said additional identity information request and said receiving said additional identity information reply, presenting a progress indication to said user on a display of said mobile terminal.

19. A mobile terminal (100) having a processing device (200), a memory (202) and a wireless interface (206, 208, 210) adapted for communication with a mobile telecommunications network, the processing device being adapted to
detect an attempt from a remote communication party to establish communication through the wireless interface;
determine, from the detected attempt, first identity information about the remote communication party;
search the memory for certain additional identity information associated with said first identity information;
in the absence of such additional identity information, transmit through said wireless interface an additional identity information request to a remote server, said request including said first identity information as a search key;
receive, through said wireless interface, an additional identity information reply; and
process additional identity information contained in said additional identity information reply to render it available to a user of the mobile terminal,
**characterized in that** the processing device is further adapted to provide a user-configurable setting that specifies what type of additional identity information that is to be requested from said remote server.

20. The mobile terminal of claim 19, the processing device being adapted to perform automatically without interaction with said user of the mobile terminal.

21. The mobile terminal of claim 19, the processing device being adapted to transmit an additional identity information request only upon command or confirmation from the user.

22. The mobile terminal of claim 19, wherein detecting an attempt to establish communication involves receiving an incoming telephone call.

23. The mobile terminal of claim 19, wherein detecting an attempt to establish communication involves receiving an incoming electronic message.

24. The mobile terminal of claim 19, wherein said first identity information is a subscriber telephone number associated with said remote communication party.

25. The mobile terminal of claim 19, wherein said additional identity information request or reply is communicated in the form of an electronic message.

26. The mobile terminal of claim 19, wherein said additional identity information request or reply is communicated in the form of packet-switched data communication.

27. The mobile terminal of claim 19, wherein said additional identity information request or reply is communicated in the form of circuit-switched data communication.

28. The mobile terminal of claim 19, wherein said additional identity information contained in said additional identity information reply comprises name information about the remote communication party.

29. The mobile terminal of claim 19, wherein said additional identity information contained in said additional identity information reply comprises name information and address information about the remote communication party.

30. The mobile terminal of claim 19, the processing device further being adapted to provide a user-configurable setting that specifies whether or not functions of the processing device are to be performed automatically without interaction with said user.

31. The mobile terminal of claim 19, wherein processing additional identity information contained in said additional identity information reply involves presentation on a display of said mobile terminal.

32. The mobile terminal of claim 22 and 31, wherein the presentation is made in real time while said incoming telephone call is still not terminated.

33. The mobile terminal of claim 22, wherein processing additional identity information contained in said additional identity information reply involves updating a record in a telephone call list stored in said memory.

34. The mobile terminal of claim 23, wherein processing additional identity information contained in said additional identity information reply involves updating a record in a message inbox stored in said memory.

35. The mobile terminal of claim 19, wherein processing additional identity information contained in said additional identity information reply involves updating or creating a contact record stored in said memory and associated with said remote communication party.

36. The mobile terminal of claim 19, wherein the processing device is further adapted, between transmitting said additional identity information request and receiving said additional identity information reply, to present a progress indication to said user on a display of said mobile terminal.

## Patentansprüche

1. Verfahren zum Erhalten von Kommunikationsteilnehmer-Identitätsinformationen, wobei das Verfahren, in einem mobilen Endgerät, aufweist:
Erfassen (300) eines Versuchs eines entfernten Kommunikationsteilnehmers, eine Kommunikation über ein Mobiltelekommunikationsnetzwerk aufzubauen;
Bestimmen (302) einer ersten Identitätsinformation bezüglich des entfernten Kommunikationsteilnehmers aus dem erfassten Versuch;
Durchsuchen (304) eines Speichers in dem mobilen Endgerät nach bestimmten zusätzlichen Identitätsinformationen, die der ersten Identitätsinformation zugeordnet sind;
Übertragen (308) einer Zusätzliche-Identitätsinformationen-Anforderung von dem mobilen Endgerät zu einem entfernten Server unter Verwendung des Mobiltelekommunikationsnetzwerks bei Nichtvorhandensein solcher zusätzlicher Identitätsinformationen, wobei die Anforderung die erste Identitätsinformation als einen Suchschlüssel enthält;
Empfangen einer Zusätzliche-Identitätsinformationen-Antwort über das Mobiltelekommunikationsnetzwerk; und
Verarbeiten (310) von in der Zusätzliche-Identitätsinformationen-Antwort enthaltenen zusätzlichen Identitätsinformationen, um sie einem Benutzer des mobilen Endgeräts zur Verfügung zu stellen,
**dadurch gekennzeichnet, dass** das Verfahren ferner ein Bereitstellen einer benutzerkonfigurierbaren Einstellung aufweist, die festlegt, welche Art von zusätzlichen Identitätsinformationen von dem entfernten Server anzufordern ist.

2. Verfahren nach Anspruch 1, wobei das Verfahren automatisch ohne Interaktion mit dem Benutzer des mobilen Endgeräts durchgeführt wird.

3. Verfahren nach Anspruch 1, wobei das Übertragen einer Zusätzliche-Identitätsinformationen-Anforderung nur auf Anweisung oder Bestätigung des Benutzers durchgeführt wird.

4. Verfahren nach Anspruch 1, wobei das Erfassen eines Versuchs eine Kommunikation aufzubauen ein Empfangen eines eingehenden Telefonanrufs umfasst.

5. Verfahren nach Anspruch 1, wobei das Erfassen eines Versuchs eine Kommunikation aufzubauen ein Empfangen einer eingehenden elektronischen Nachricht umfasst.

6. Verfahren nach Anspruch 1, wobei die erste Identitätsinformation eine dem entfernten Kommunikationsteilnehmer zugeordnete Teilnehmertelefonnummer ist.

7. Verfahren nach Anspruch 1, wobei die Zusätzliche-Identitätsinformationen-Anforderung oder -Antwort in der Form einer elektronischen Nachricht übertragen wird.

8. Verfahren nach Anspruch 1, wobei die Zusätzliche-Identitätsinformationen-Anforderung oder -Antwort in der Form von paketvermittelter Datenübertragung übertragen wird.

9. Verfahren nach Anspruch 1, wobei die Zusätzliche-Identitätsinformationen-Anforderung oder -Antwort in der Form von leitungsvermittelter Datenübertragung übertragen wird.

10. Verfahren nach Anspruch 1, wobei die in der Zusätzliche-Identitätsinformationen-Antwort enthaltenen zusätzlichen Identitätsinformationen Namensinformationen bezüglich des entfernten Kommunikationsteilnehmers umfassen.

11. Verfahren nach Anspruch 1, wobei die in der Zusätzliche-Identitätsinformationen-Antwort enthaltenen zusätzlichen Identitätsinformationen Namensinformationen und Adressinformationen bezüglich des entfernten Kommunikationsteilnehmers umfassen.

12. Verfahren nach Anspruch 1, wobei das Bereitstellen einer benutzerkonfigurierbaren Einstellung festlegt, ob Schritte des Verfahrens automatisch ohne Interaktion mit dem Benutzer durchzuführen sind oder nicht.

13. Verfahren nach Anspruch 1, wobei das Verarbeiten von in der Zusätzliche-Identitätsinformationen-Antwort enthaltenen zusätzlichen Identitätsinformationen ein Darstellen auf einer Anzeige des mobilen Endgeräts umfasst.

14. Verfahren nach Anspruch 4 und 13, wobei das Darstellen in Echtzeit vorgenommen wird, während der eingehende Telefonanruf noch nicht beendet ist.

15. Verfahren nach Anspruch 4, wobei das Verarbeiten von in der Zusätzliche-Identitätsinformationen-Antwort enthaltenen zusätzlichen Identitätsinformationen ein Aktualisieren eines Eintrags in einer in dem Speicher gespeicherten Telefonanrufliste umfasst.

16. Verfahren nach Anspruch 5, wobei das Verarbeiten in der Zusätzliche-Identitätsinformationen-Antwort enthaltener zusätzlicher Identitätsinformationen ein Aktualisieren eines Eintrags in einem in dem Speicher gespeicherten Nachrichteneingang umfasst.

17. Verfahren nach Anspruch 1, wobei das Verarbeiten von in der Zusätzliche-Identitätsinformationen-Antwort enthaltenen zusätzlichen Identitätsinformationen ein Aktualisieren oder Erstellen eines in dem Speicher gespeicherten und dem entfernten Kommunikationsteilnehmer zugeordneten Kontakteintrags umfasst.

18. Verfahren nach Anspruch 1, ferner mit einem Darstellen einer Fortschrittsanzeige für den Benutzer auf einer Anzeige des mobilen Endgeräts zwischen dem Übertragen der Zusätzliche-Identitätsinformationen-Anforderung und dem Empfangen der Zusätzliche-Identitätsinformationen-Antwort.

19. Mobiles Endgerät (100) mit einer Verarbeitungsvorrichtung (200), einem Speicher (202) und einer kabellosen Schnittstelle (206, 208, 210), die zur Kommunikation mit einem Mobiltelekommunikationsnetzwerk eingerichtet ist, wobei die Verarbeitungsvorrichtung dazu eingerichtet ist, um
einen Versuch eines entfernten Kommunikationsteilnehmers zu erfassen, eine Kommunikation über die kabellose Schnittstelle aufzubauen;
aus dem erfassten Versuch eine erste Identitätsinformation bezüglich des entfernten Kommunikationsteilnehmers zu bestimmen;
den Speicher nach bestimmten zusätzlichen Identitätsinformationen zu durchsuchen, die der ersten Identitätsinformation zugeordnet sind;
bei Nichtvorhandensein solcher zusätzlicher Identitätsinformationen eine Zusätzliche-Identitätsinformationen-Anforderung über die kabellose Schnittstelle zu einem entfernten Server zu übertragen, wobei die Anforderung die erste Identitätsinformation als einen Suchschlüssel enthält;
eine Zusätzliche-Identitätsinformationen-Antwort über die kabellose Schnittstelle zu empfangen; und
in der Zusätzliche-Identitätsinformationen-Antwort enthaltene zusätzliche Identitätsinformationen zu verarbeiten, um sie einem Benutzer des mobilen Endgeräts zur Verfügung zu stellen,
**dadurch gekennzeichnet, dass** die Verarbeitungsvorrichtung ferner dazu eingerichtet ist, um eine benutzerkonfigurierbare Einstellung bereitzustellen, die festlegt, welche Art von zusätzlichen Identitätsinformationen von dem entfernten Server anzufordern ist.

20. Mobiles Endgerät nach Anspruch 19, wobei die Verarbeitungsvorrichtung dazu eingerichtet ist, um automatisch ohne Interaktion mit dem Benutzer des mobilen Endgeräts durchzuführen.

21. Mobiles Endgerät nach Anspruch 19, wobei die Verarbeitungsvorrichtung dazu eingerichtet ist, um eine Zusätzliche-Identitätsinformationen-Anforderung nur auf Anweisung oder Bestätigung des Benutzers zu übertragen.

22. Mobiles Endgerät nach Anspruch 19, wobei eine Erfassung eines Versuchs eine Kommunikation aufzubauen einen Empfang eines eingehenden Telefonanrufs umfasst.

23. Mobiles Endgerät nach Anspruch 19, wobei eine Erfassung eines Versuchs eine Kommunikation aufzubauen einen Empfang einer eingehenden elektronischen Nachricht umfasst.

24. Mobiles Endgerät nach Anspruch 19, wobei die erste Identitätsinformation eine dem entfernten Kommunikationsteilnehmer zugeordnete Teilnehmertelefonnummer ist.

25. Mobiles Endgerät nach Anspruch 19, wobei die Zusätzliche-Identitätsinformationen-Anforderung oder -Antwort in der Form einer elektronischen Nachricht übertragen wird.

26. Mobiles Endgerät nach Anspruch 19, wobei die Zusätzliche-Identitätsinformationen-Anforderung oder -Antwort in der Form von paketvermittelter Datenübertragung übertragen wird.

27. Mobiles Endgerät nach Anspruch 19, wobei die Zusätzliche-Identitätsinformationen-Anforderung oder -Antwort in der Form von leitungsvermittelter Datenübertragung übertragen wird.

28. Mobiles Endgerät nach Anspruch 19, wobei die in der Zusätzliche-Identitätsinformationen-Antwort enthaltenen zusätzlichen Identitätsinformationen Namensinformationen bezüglich des entfernten Kommunikationsteilnehmers umfassen.

29. Mobiles Endgerät nach Anspruch 19, wobei die in der Zusätzliche-Identitätsinformationen-Antwort enthaltenen zusätzlichen Identitätsinformationen Namensinformationen und Adressinformationen bezüglich des entfernten Kommunikationsteilnehmers umfassen.

30. Mobiles Endgerät nach Anspruch 19, wobei die Verarbeitungsvorrichtung ferner dazu eingerichtet ist, um eine benutzerkonfigurierbare Einstellung bereitzustellen, die festlegt, ob Funktionen der Verarbeitungsvorrichtung automatisch ohne Interaktion mit dem Benutzer durchzuführen sind oder nicht.

31. Mobiles Endgerät nach Anspruch 19, wobei die Verarbeitung von in der Zusätzliche-Identitätsinformationen-Antwort enthaltenen zusätzlichen Identitätsinformationen eine Darstellung auf einer Anzeige des mobilen Endgeräts umfasst.

32. Mobiles Endgerät nach Anspruch 22 und 31, wobei die Darstellung in Echtzeit vorgenommen wird, während der eingehende Telefonanruf noch nicht beendet ist.

33. Mobiles Endgerät nach Anspruch 22, wobei die Verarbeitung von in der Zusätzliche-Identitätsinformationen-Antwort enthaltenen zusätzlichen Identitätsinformationen eine Aktualisierung eines Eintrags in einer in dem Speicher gespeicherten Telefonanrufliste umfasst.

34. Mobiles Endgerät nach Anspruch 23, wobei die Verarbeitung von in der Zusätzliche-Identitätsinformationen-Antwort enthaltenen zusätzlichen Identitätsinformationen eine Aktualisierung eines Eintrags in einem in dem Speicher gespeicherten Nachrichteneingang umfasst.

35. Mobiles Endgerät nach Anspruch 19, wobei die Verarbeitung von in der Zusätzliche-Identitätsinformationen-Antwort enthaltenen zusätzlichen Identitätsinformationen eine Aktualisierung oder Erstellung eines in dem Speicher gespeicherten und dem entfernten Kommunikationsteilnehmer zugeordneten Kontakteintrags umfasst.

36. Mobiles Endgerät nach Anspruch 19, wobei die Verarbeitungsvorrichtung ferner dazu eingerichtet ist, um zwischen der Übertragung der Zusätzliche-Identitätsinformationen-Anforderung und dem Empfang der Zusätzliche-Identitätsinformationen-Antwort eine Fortschrittsanzeige für den Benutzer auf einer Anzeige des mobilen Endgeräts darzustellen.

## Revendications

1. Procédé d'obtention d'informations d'identité d'une partie à une communication, le procédé, dans un terminal mobile, comprenant :
la détection (300) d'une tentative, par une partie à une communication à distance, d'établir une communication sur un réseau de télécommunication mobile ;
la détermination (302), à partir de la tentative détectée, de premières informations d'identité concernant la partie à la communication à distance ;
la recherche (304), dans une mémoire du terminal mobile, de certaines informations d'identité supplémentaires associées auxdites premières informations d'identité ;
en l'absence de ces informations d'identité supplémentaires, la transmission (308), par ledit terminal mobile, d'une demande d'informations d'identité supplémentaires à un serveur à distance en utilisant le réseau de télécommunication mobile, ladite demande comprenant lesdites premières informations d'identité en tant que clé de recherche ;
la réception d'une réponse d'informations d'identité supplémentaires sur le réseau de télécommunication mobile ; et
le traitement (310) des informations d'identité supplémentaires contenues dans ladite réponse d'informations d'identité supplémentaires pour les rendre disponibles à un utilisateur du terminal mobile,
**caractérisé en ce que** le procédé comprend en outre la fourniture d'un paramétrage configurable par un utilisateur qui spécifie quel type d'informations d'identité supplémentaires doivent être demandées audit serveur à distance.

2. Procédé selon la revendication 1, dans lequel le procédé est effectué automatiquement sans interaction avec ledit utilisateur du terminal mobile.

3. Procédé selon la revendication 1, dans lequel ladite transmission d'une demande d'informations d'identité supplémentaires n'est effectuée que lors d'une commande ou d'une confirmation de l'utilisateur.

4. Procédé selon la revendication 1, dans lequel ladite détection d'une tentative d'établir une communication implique la réception d'un appel téléphonique entrant.

5. Procédé selon la revendication 1, dans lequel ladite détection d'une tentative d'établir une communication implique la réception d'un message électronique entrant.

6. Procédé selon la revendication 1, dans lequel lesdites premières informations d'identité sont un numéro de téléphone d'abonné associé à ladite partie à la communication à distance.

7. Procédé selon la revendication 1, dans lequel ladite demande ou réponse d'informations d'identité supplémentaires est communiquée sous la forme d'un message électronique.

8. Procédé selon la revendication 1, dans lequel ladite demande ou réponse d'informations d'identité supplémentaires est communiquée sous la forme d'une communication de données à commutation de paquets.

9. Procédé selon la revendication 1, dans lequel ladite demande ou réponse d'informations d'identité supplémentaires est communiquée sous la forme d'une communication de données à commutation de circuits.

10. Procédé selon la revendication 1, dans lequel lesdites informations d'identité supplémentaires contenues dans ladite réponse d'informations d'identité supplémentaires comprennent des informations de nom concernant la partie à la communication à distance.

11. Procédé selon la revendication 1, dans lequel lesdites informations d'identité supplémentaires contenues dans ladite réponse d'informations d'identité supplémentaires comprennent des informations de nom et des informations d'adresse concernant la partie à la communication à distance.

12. Procédé selon la revendication 1, dans lequel ladite fourniture de paramétrage configurable par un utilisateur spécifie si, oui ou non, des étapes du procédé doivent être effectuées automatiquement sans interaction avec ledit utilisateur.

13. Procédé selon la revendication 1, dans lequel ledit traitement des informations d'identité supplémentaires contenues dans ladite réponse d'informations d'identité supplémentaires implique une présentation sur un afficheur dudit terminal mobile.

14. Procédé selon les revendications 4 et 13, dans lequel la présentation est effectuée en temps réel alors que ledit appel téléphonique entrant n'est pas encore terminé.

15. Procédé selon la revendication 4, dans lequel ledit traitement des informations d'identité supplémentaires contenues dans ladite réponse d'informations d'identité supplémentaires implique la mise à jour d'un enregistrement dans une liste d'appels téléphoniques mémorisée dans ladite mémoire.

16. Procédé selon la revendication 5, dans lequel ledit traitement des informations d'identité supplémentaires contenues dans ladite réponse d'informations d'identité supplémentaires implique la mise à jour d'un enregistrement dans une boîte de réception de messages mémorisée dans ladite mémoire.

17. Procédé selon la revendication 1, dans lequel ledit traitement des informations d'identité supplémentaires contenues dans ladite réponse d'informations d'identité supplémentaires implique la mise à jour ou la création d'un enregistrement de contact mémorisé dans ladite mémoire et associé à ladite partie à la communication à distance.

18. Procédé selon la revendication 1, qui comprend en outre, entre ladite transmission de ladite demande d'informations d'identité supplémentaires et ladite réception de ladite réponse d'informations d'identité supplémentaires, la présentation d'une indication de progression audit utilisateur sur un afficheur dudit terminal mobile.

19. Terminal mobile (100) comportant un dispositif de traitement (200), une mémoire (202) et une interface sans fil (206, 208, 210) conçue pour une communication avec un réseau de télécommunication mobile, le dispositif de traitement étant conçu pour :
détecter une tentative, par une partie à la communication à distance, d'établir une communication par l'intermédiaire de l'interface sans fil ;
déterminer, à partir de la tentative détectée, des premières informations d'identité concernant la partie à la communication à distance ;
rechercher, dans la mémoire, certaines informations d'identité supplémentaires associées auxdites premières informations d'identité ;
en l'absence de ces informations d'identité supplémentaires, transmettre, par l'intermédiaire de ladite interface sans fil, une demande d'informations d'identité supplémentaires à un serveur à distance, ladite demande comprenant lesdites premières informations d'identité en tant que clé de recherche ;
recevoir, par l'intermédiaire de ladite interface sans fil, une réponse d'informations d'identité supplémentaires ; et
traiter les informations d'identité supplémentaires contenues dans ladite réponse d'informations d'identité supplémentaires pour les rendre disponibles à un utilisateur du terminal mobile,
**caractérisé en ce que** le dispositif de traitement est en outre conçu pour fournir un paramétrage configurable par un utilisateur qui spécifie quel type d'informations d'identité supplémentaires doivent être demandé audit serveur à distance.

20. Terminal mobile selon la revendication 19, le dispositif de traitement étant conçu pour fonctionner automatiquement sans interaction avec ledit utilisateur du terminal mobile.

21. Terminal mobile selon la revendication 19, le dispositif de traitement étant conçu pour ne transmettre une demande d'informations d'identité supplémentaires que lors d'une commande ou d'une confirmation de l'utilisateur.

22. Terminal mobile selon la revendication 19, dans lequel une détection d'une tentative d'établir une communication implique la réception d'un appel téléphonique entrant.

23. Terminal mobile selon la revendication 19, dans lequel une détection d'une tentative d'établir une communication implique la réception d'un message électronique entrant.

24. Terminal mobile selon la revendication 19, dans lequel lesdites premières informations d'identité sont un numéro de téléphone d'abonné associé à ladite partie à la communication à distance.

25. Terminal mobile selon la revendication 19, dans lequel ladite demande ou réponse d'informations d'identité supplémentaires est communiquée sous la forme d'un message électronique.

26. Terminal mobile selon la revendication 19, dans lequel ladite demande ou réponse d'informations d'identité supplémentaires est communiquée sous la forme d'une communication de données à commutation de paquets.

27. Terminal mobile selon la revendication 19, dans lequel ladite demande ou réponse d'informations d'identité supplémentaires est communiquée sous la forme d'une communication de données à commutation de circuits.

28. Terminal mobile selon la revendication 19, dans lequel lesdites informations d'identité supplémentaires contenues dans ladite réponse d'informations d'identité supplémentaires comprennent des informations de nom concernant la partie à la communication à distance.

29. Terminal mobile selon la revendication 19, dans lequel lesdites informations d'identité supplémentaires contenues dans ladite réponse d'informations d'identité supplémentaires comprennent des informations de nom et des informations d'adresse concernant la partie à la communication à distance.

30. Terminal mobile selon la revendication 19, le dispositif de traitement étant en outre conçu pour fournir un paramétrage configurable par un utilisateur qui spécifie si, oui ou non, des fonctions du dispositif de traitement doivent être effectuées automatiquement sans interaction avec ledit utilisateur.

31. Terminal mobile selon la revendication 19, dans lequel le traitement des informations d'identité supplémentaires contenues dans ladite réponse d'informations d'identité supplémentaires implique une présentation sur un afficheur dudit terminal mobile.

32. Terminal mobile selon les revendications 22 et 31, dans lequel la présentation est effectuée en temps réel alors que ledit appel téléphonique entrant n'est pas encore terminé.

33. Terminal mobile selon la revendication 22, dans lequel le traitement des informations d'identité supplémentaires contenues dans ladite réponse d'informations d'identité supplémentaires implique la mise à jour d'un enregistrement dans une liste d'appels téléphoniques mémorisée dans ladite mémoire.

34. Terminal mobile selon la revendication 23, dans lequel le traitement des informations d'identité supplémentaires contenues dans ladite réponse d'informations d'identité supplémentaires implique la mise à jour d'un enregistrement dans une boîte de réception de messages mémorisée dans ladite mémoire.

35. Terminal mobile selon la revendication 19, dans lequel le traitement des informations d'identité supplémentaires contenues dans ladite réponse d'informations d'identité supplémentaires implique la mise à jour ou la création d'un enregistrement de contact mémorisé dans ladite mémoire et associé à ladite partie à la communication à distance.

36. Terminal mobile selon la revendication 19, dans lequel le dispositif de traitement est en outre conçu pour, entre la transmission de ladite demande d'informations d'identité supplémentaires et la réception de ladite réponse d'informations d'identité supplémentaires, présenter une indication de progression audit utilisateur sur un afficheur dudit terminal mobile.
